# EUROPÄISCHE PATENTANMELDUNG

(11) **EP 0 979 758 A1**
(43) Veröffentlichungstag der Anmeldung: **16.02.2000**
(21) Anmeldenummer: 99111204.6
(22) Anmeldetag: 09.06.1999
(51) Int. Cl.: B60R 1/12

(54) **Rückspiegel, insbesondere für Nutzfahrzeuge mit einer Antenneneinheit**

(30) Priorität: 11.08.1998 DE 29814367 U
(71) Anmelder: MEKRA Lang GmbH & Co. KG, D-90765 Fürth (DE)
(72) Erfinder: Lang, Heinrich, 91465 Ergersheim (DE); Seiboth, Wolfgang, 91438 Bad Windsheim (DE)
(74) Vertreter: Hübner, Gerd, Dipl.-Phys.

(57) **Zusammenfassung**

Bei einem Rückspiegel, insbesondere für Nutzfahrzeuge, mit einem Haltearm (1), einem daran angebrachten Gehäuse (2) mit einer Montageöffnung, einer in die Montageöffnung des Gehäuses (2) eingesetzten Trägerplatte (12), einer auf der Trägerplatte (12) befestigten Spiegelscheibe (11) und einer im Gehäuse (2) angeordneten Antenneneinheit (25) ist vorgesehen, den Rückspiegel derart zu modifizieren, daß ein rationelleres Montieren der Antenne ermöglicht wird durch eine im Gehäuse (2) angeordnete, im wesentlichen in Einsetzrichtung (A) der Trägerplatte (12) offene Aufnahme (24), in die die Antenneneinheit (25) eingesetzt ist, wobei die Antenneneinheit (25) von der der Spiegelscheibe (11) abgewandten Rückseite (16) der im Gehäuse (2) eingesetzten Trägerplatte (12) in der Aufnahme (24) fixiert ist.

## Beschreibung

Die Erfindung betrifft einen Rückspiegel, insbesondere für Nutzfahrzeuge, mit den im Oberbegriff des Anspruches 1 angegebenen Merkmalen.

Ein derartiger Rückspiegel ist aus der DE 43 43 691 A1 bekannt. Diese Druckschrift offenbart einen Rückspiegel mit einem Haltearm und einem daran verstellbar gelagerten Gehäuse, das eine Montageöffnung aufweist. In diese ist eine Trägerplatte eingesetzt, auf der eine Spiegelscheibe befestigt ist.

Aus der DE 196 02 578 A1 ist ein anderer Typ von Außenrückblickspiegel für Nutzfahrzeuge offenbart. Hierbei ist eine Trägerplatte als tragendes Teil des Rückspiegels fest mit einem Halter verbunden, wobei ein wannenförmiges Gehäuse an die Trägerplatte anschließt. Daran ist ferner eine Spiegelscheibe verschwenkbar angeordnet. An der festen Trägerplatte ist eine Fahrzeugantenne zum Empfang oder Senden von Radio-, Mobilfunk-, Satellitennavigationssignalen oder dergleichen montiert.

Bei der bekannten Antennenanordnung in Rückspiegeln ist es von Nachteil, daß die Anbringung der Antenne im Spiegelgehäuse mehrere zusätzliche Montageschritte erfordert.

Daher ist es Aufgabe der Erfindung, einen gattungsgemäßen Rückspiegel derart zu modifizieren, daß ein rationelleres Montieren der Antenne ermöglicht wird. Diese Aufgabe wird durch die im Kennzeichnungsteil des Anspruches 1 angegebenen Merkmale gelöst.

Ein Vorteil dieser Erfindung ist, daß die Antenneneinheit nach dem Einsetzen in die Aufnahme von der Trägerplatte gegen ein Herausfallen aus der Aufnahme gesichert wird, ohne daß zusätzliche Befestigungselemente für die Antenneneinheit notwendig sind. Für diese Montageanordnung der Antenneneinheit sind lediglich unwesentliche Modifikationen des Gehäuses sowie der Trägerplatte erforderlich, was den Herstellungsaufwand für diese kaum erhöht. Ferner erfüllt die Trägerplatte beim Erfingungsgegenstand eine Doppelfunktion, nämlich die Lagerung der Spiegelscheibe und die Fixierung der Antenneneinheit.

Um eine schnelle und sichere Montage zu gewährleisten, wird die Aufnahme in der Nähe des der Trägerplatte benachbarten Wandbereichs des Gehäuses angeordnet.

Ferner wird durch die Anordnung der Aufnahme am oberen Gehäuserand eine störungsfreie Funktion der Antenneneinheit realisiert, da keine störenden Elemente, wie elektrische Motoren oder irgendwelche metallischen Teile, den Sende- und Empfangsweg der Signale von der Antenneneinheit zu beispielsweise einem Satelliten störend beeinflussen können.

Eine bevorzugte Ausbildung der Rückseite der Trägerplatte sieht eine Fixiernase vor, die die Antenneneinheit in der Aufnahme hält, wenn die Trägerplatte im Gehäuse eingesetzt ist.

Eine besonders einfache Montage der Trägerplatte wird realisiert, indem die Trägerplatte auf ihrer der Spiegelseite abgewandten Rückseite Verriegelungsstege umfaßt, die in angepaßte Ausnehmungen im Gehäuse eingreifen.

Für Satelliten-Navigationseinrichtungen ist mindestens eine Antenne erforderlich, die für die Grundfunktion des Navigationssystems und weiteren Sonderfunktionen, wie die beispielsweise sogenannte "Telematik-" oder eine Autopilot-Funktion, verwendet wird. Für unterschiedliche Funktionen können in ein und demselben Fahrzeug auch mehrere Antennen notwendig werden oder eine Antennenweiche zu verbauen sein. Im fahrer- und beifahrerseitigen Rückspiegel kann dieser Erfordernis problemlos Genüge geleistet werden.

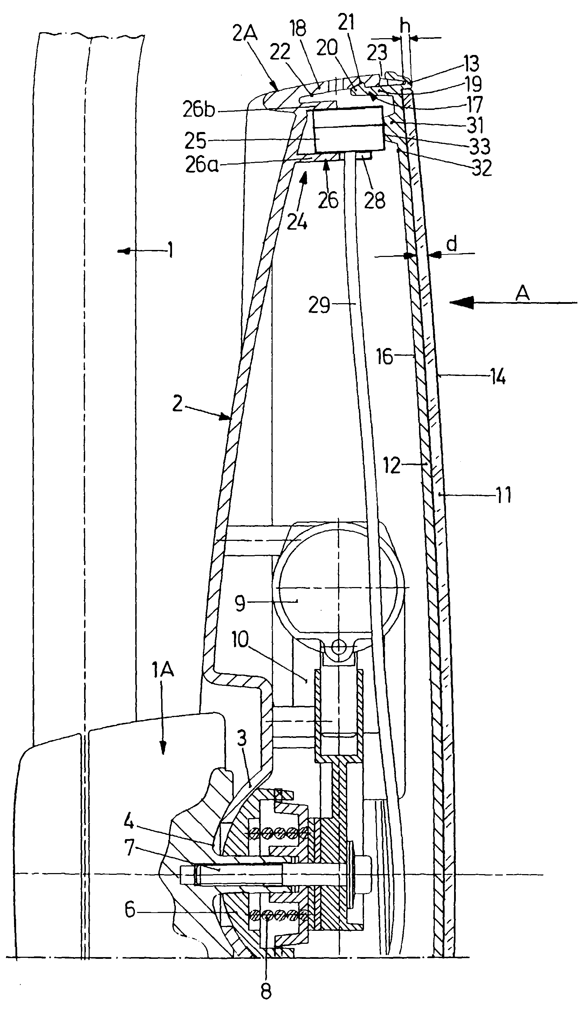

Weitere Vorteile und Merkmale der Erfindung werden in der Beschreibung eines Ausführungsbeispiels anhand der beiliegenden Figur näher erläutert.

Die Figur zeigt in einem Vertikalschnitt die obere Hälfte eines erfindungsgemäßen Rückspiegels, insbesondere eines Außenspiegels für LKW's. Der Spiegel weist einen am (nicht gezeigten) Fahrerhaus eines LKW's befestigbaren Haltearm 1 auf, an dem ein Gehäuse 2 schwenkbar gelagert ist. Das Gehäuse 2 ist in einer kugelkalottenförmig ausgebildeten Lagerschale 3 in einer entsprechenden Lagerausnehmung 4 eines Lagerkopfes 1A am Haltearm 1 gelagert und wird mittels eines im Innenraum des Gehäuses 2 befindlichen Lagerkörpers 6 in die Lagerausnehmung 4 gedrückt. Das Gesamtpaket ist mittels eines Gewindebolzens 7 zusammengehalten, gegen den sich mittelbar eine Druckfeder 8 abstützt, die sich andererseits gegen den Lagerkörper 6 abstützt, so daß der Lagerkörper 6 mit einem ausreichenden Druck gegen die Lagerschale 3 und diese wiederum gegen die Lagerausnehmung 4 gedrückt wird. Zur Schwenkverstellung des Gehäuses 2 gegenüber dem Haltearm 1 sind zwei Stellmotoren 9, 10 vorgesehen, die einerseits im Gehäuse 2 fest angeordnet sind und andererseits mit dem Gewindebolzen 7 verbunden sind, der fest in den Lagerkopf 1A geschraubt ist.

Das Gehäuse 2 ist mit einer Spiegelscheibe 11 versehen, die auf eine Trägerplatte 12 geklebt ist. Diese Trägerplatte 12 weist einen umlaufenden Randsteg 13 auf, der eine Höhe h aufweist, die maximal der Dicke d der Spiegelscheibe 11 entspricht. Im Außenbereich ist der Randsteg 13 zur Spiegelscheibe 11 hin verjüngt bzw. eingeschnürt, so daß in der Ebene der Oberfläche 14 der Spiegelscheibe 11 der Randsteg 13 eine vernachläßigbare Dicke hat. Die nicht gesondert dargestellte Spiegelbeschichtung der Spiegelscheibe 11 befindet sich - wie üblich - auf der der Trägerplatte 12 zugewandten Seite der Spiegelscheibe 11.

Die Trägerplatte 12 ist auf ihrer der Spiegelscheibe 11 abgewandten Rückseite 16 mit einem umlaufenden Verriegelungssteg 17 versehen. Dieser besteht im wesentlichen aus einem in den zugeordneten offenen Wandbereich 18 des Gehäuses 2 hineinragenden Wandabschnitt 19, der dicht an der Innenseite des Wandbereichs 18 anliegt. Zu seinem freien Ende hin ist der Wandabschnitt 19 mit einem widerhakenartigen Vorspruch 20 versehen, der ebenfalls umläuft. Der Vorsprung 20 verjüngst sich am freien Ende des Wandabschnitts 19 hin nach innen, so daß er im Querschnitt die Form einer längsgeteilten Pfeilspitze aufweist. Dem Vorsprung 20 ist eine umlaufende nutartige Ausnehmung 21 in der Innenwand 22 des Gehäuses 2 zugeordnet, in die der Vorsprung 20 nach dem Einschieben des Verriegelungssteges in den Wandbereich 18 des Gehäuses 2 elastisch einrastet. Zwischen der Rückseite 16 der Trägerplatte 12 und dem Wandbereich 18 des Gehäuses 2 verbleibt eine nach außen offene nutartige Ausnehmung 23, die bewirkt, daß beim Fahren eines Fahrzeuges der Luftstrom abreist, so daß eine geringere Verschmutzung der Oberfläche 14 der Spiegelscheiben 11 eintritt.

In unmittelbarer Nähe zum Wandbereich 18 am oberen Randbereich 2A des Gehäuses 2 ist eine Aufnahme 24 einstückig an das Gehäuse 2 angeformt, wobei eine Antenneneinheit 25 spielfrei in die Aufnahme 24 einsetzbar ist. Die Aufnahme 24 umfaßt eine die Antenneneinheit 25 umgebende Wand 26, wobei der untere Wandbereich 26a länger als der obere Wandbereich 26b ausgebildet ist. In dem unteren Wandbereich 26a ist ein zur Trägerplatte 12 hin offener Schlitz 28 vorgesehen, in dem ein von der Seite eingeführtes Signalleitungskabel 29 sitzt. Dieses Signalleitungskabel 29 ist mit der Antenneneinheit 25 und einer nicht dargestellten Navigationsrechnereinheit verbunden.

In die Aufnahme 24, die im wesentlichen in Einsetzrichtung A der Trägerplatte 12 offen ist, wird die Antenneneinheit 25, insbesondere eine Satelitten-Navigationsantenne, eingeschoben. Diese wird von einer mit der Trägerplatte 12 an ihrer Rückseite 16 einstückig gebildeten Fixiernase 31 gehalten, wenn die Trägerplatte 12 im Gehäuse 2 eingesetzt ist.

Die Fixiernase 31 besitzt einen sich vom Fixiernasengrund 32 aus verjüngenden trapezförmigen Querschnitt. Ihr flaches Ende gewährleistet eine sichere Anlage der Fixiernase 31 an die ihr zugewandte Seite der Antenneneinheit 25 und eventuell das Einschieben der nicht ganz in der Aufnahme 24 sitzenden Antenneneinheit 25 beim Montieren der Trägerplatte 12.

## Patentansprüche

1. Rückspiegel, insbesondere für Nutzfahrzeuge, mit
- einem Haltearm (1),
- einem daran angebrachten Gehäuse (2) mit einer Montageöffnung,
- einer in die Montageöffnung des Gehäuses (2) eingesetzten Trägerplatte (12),
- einer auf der Trägerplatte (12) befestigten Spiegelscheibe (11) und
- einer im Gehäuse (2) angeordneten Antenneneinheit (25),
**gekennzeichnet durch**
- eine im Gehäuse (2) angeordnete, im wesentlichen in Einsetzrichtung (A) der Trägerplatte (12) offene Aufnahme (24), in die die Antenneneinheit (25) eingesetzt ist, wobei die Antenneneinheit (25) von der der Spiegelscheibe (11) abgewandten Rückseite (16) der im Gehäuse (2) eingesetzten Trägerplatte (12) in der Aufnahme (24) fixiert ist.

2. Rückspiegel nach Anspruch 1, **dadurch gekennzeichnet, daß** die Aufnahme (24) in der Nähe des der Trägerplatte (12) benachbarten Wandbereichs (18) des Gehäuses (2) angeordnet ist.

3. Rückspiegel nach einem der Ansprüche 1 oder 2, **dadurch gekennzeichnet, daß** die Aufnahme (24) am oberen Gehäuserand (2A) untergebracht ist.

4. Rückspiegel nach einem der Ansprüche 1 bis 3, **dadurch gekennzeichnet, daß** die Antenneneinheit (25) eine Satelliten-Navigationsantenne ist.

5. Rückspiegel nach einem der Ansprüche 1 bis 4, **dadurch gekennzeichnet, daß** die Antenneneinheit (25) spielfrei in der Aufnahme (24) sitzt.

6. Rückspiegel nach einem der Ansprüche 1 bis 5, **dadurch gekennzeichnet, daß** an die Rückseite (16) der Trägerplatte (12) eine die Antenneneinheit (25) beaufschlagende Fixiernase (31) angeformt ist.

7. Rückspiegel nach einem der Ansprüche 1 bis 6, **dadurch gekennzeichnet, daß** die Aufnahme (24) einstückig mit dem Gehäuse (2) ausgebildet ist.

8. Rückspiegel nach einem der Ansprüche 1 bis 7, **dadurch gekennzeichnet, daß** die Trägerplatte (12) auf ihrer der Spiegelscheibe (11) abgewandten Rückseite (16) mit Verriegelungsstegen (17) versehen ist, die in angepaßte Ausnehmungen (21) im Gehäuse (2) eingreifen.
